Europäisches Patentamt

European Patent Office

Office européen des brevets

(19)

(11) Publication number : **0 323 415 B1**

(12) **EUROPEAN PATENT SPECIFICATION**

(45) Date of publication of patent specification :
**15.07.92 Bulletin 92/29**

(51) Int. Cl.⁵ : **C03B 9/18,** C03B 9/195,
**C03B 9/44**

(21) Application number : **88830544.8**

(22) Date of filing : **20.12.88**

(54) **Device and machine for the manufacture of blown glass articles.**

(30) Priority : **24.12.87 IT 6812987**

(43) Date of publication of application :
**05.07.89 Bulletin 89/27**

(45) Publication of the grant of the patent :
**15.07.92 Bulletin 92/29**

(84) Designated Contracting States :
**DE ES FR GB NL SE**

(56) References cited :
**FR-A- 2 552 421**
**US-A- 1 975 051**
**US-A- 2 415 997**
**US-A- 3 870 498**

(73) Proprietor : **OLIVOTTO S.p.A.**
**Corso Matteotti, 25**
**I-10121 Torino (IT)**

(72) Inventor : **Lumare, Wladimiro**
**Via Pacchiotti, 6/bis**
**I-10146 Torino (IT)**

(74) Representative : **Saconney, Piero et al**
**c/o JACOBACCI-CASETTA & PERANI S.p.A.**
**Via Alfieri, 17**
**I-10121 Torino (IT)**

EP 0 323 415 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to the manufacture of blown glass articles and particularly concerns a device of the type defined in the preamble of Claim 1 and a machine of the type defined in the preamble of Claim 2.

Devices and machines of this type are known from the documents US-A- 3 870 498 and FR-A- 2 552 421.

In these known devices, the working table can be tilted through 180° between the working position and the position for discharging the piece. This arrangement prevents fragments of the collar from falling to the bottom of the blown article when the collar is cut off by the cutting member, with the resulting problems.

The prior-art devices mentioned above are used on machines with carousels. Such machines comprise a circular series of devices or units which carry out their working cycle whilst the carousel rotates.

In the known solutions in which the table is tilted through 180°, the tilting takes place towards the outside of the carousel. This has the disadvantage that, when the table of a unit is in the discharge position, it occupies a considerable space around the carousel through an arc of its travel which extends for more than a metre upstream and downstream of the discharge station. The projection of the table can also constitute a danger for the personnel who are near the discharge station. Finally, the removal of the article from the overturned table requires the use of a fairly complicated transfer device for removing the product and transferring it to a conveyor or other discharge system.

An object of the present invention is to produce a device and a machine for the manufacture of blown glass articles which does not have this disadvantage.

According to the present invention, the device of the type mentioned above is characterised in that the working table is tilted through 90° between the working position and the discharge position.

By virtue of this solution, the problems which were due to the projection of the tilted working table are eliminated. Moreover, when the working table of the device according to the invention is tilted into the discharge position, the article is directed radially towards the outside of the carousel where it can be removed by a relatively simple transfer device.

However, the tilting through 90° is quite sufficient for preventing fragments of the collar from falling into the blown article.

The invention also concerns a machine for the manufacture of blown glass articles, according to claim 2.

The invention will become clearer from a reading of the detailed description which follows with reference to the appended drawings, given purely by way of non-limiting example, in which:

Figure 1 is a diametral half-section of a carousel machine according to the invention,

Figure 2 is a partial schematic view thereof from above,

Figure 3 is a partial perspective view thereof,

Figure 4 is a section of one of the units of the machine taken, on an enlarged scale, in the plane indicated IV-IV in Figure 2 with the working table in the working position,

Figure 5 is a horizontal section taken substantially on the broken line V-V of Figure 4, with the table seen from below,

Figure 6 is a perspective view of the unit of Figures 4 and 5, with the table shown in the working position and during its rotation,

Figure 7 is a perspective view of a detail, taken substantially as indicated by the arrow VII in Figure 5,

Figure 8 is a perspective view in the same condition as in Figures 4, 5 and 6,

Figure 9 is a section of a blowing unit taken, as indicated IX-IX in Figure 2, with the working table in the discharge position,

Figure 10 is a perspective view of the unit in the same condition as in Figure 9, and

Figure 11 is a section of one of the grippers of the transfer device of the machine taken, on an enlarged scale, in the plane indicated XI-XI in Figure 1.

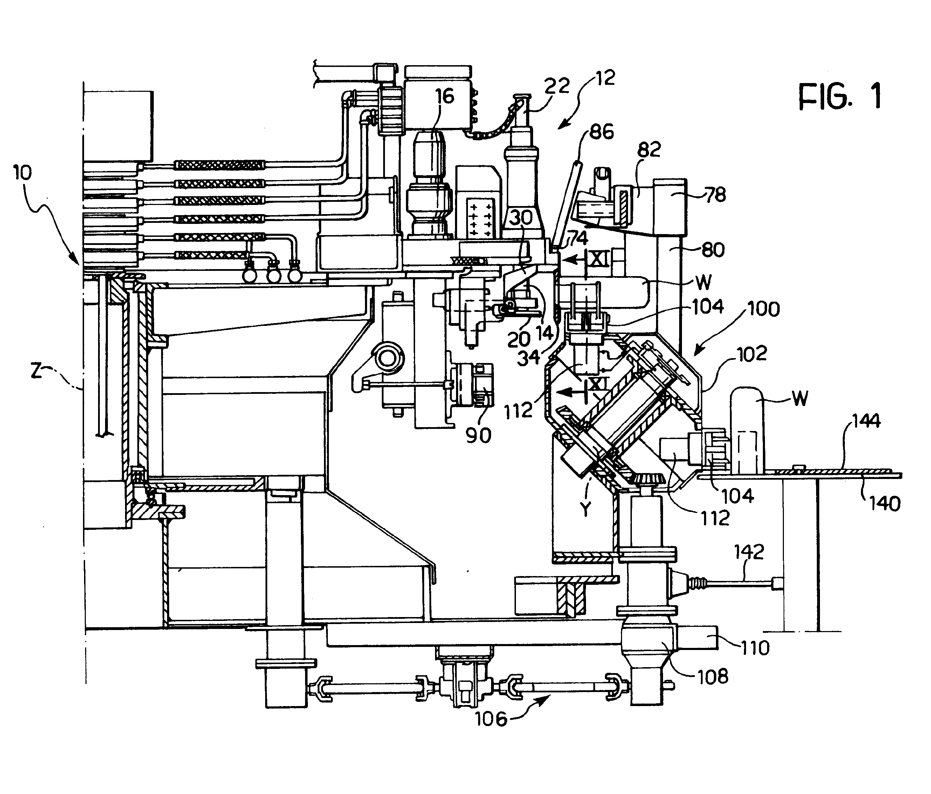

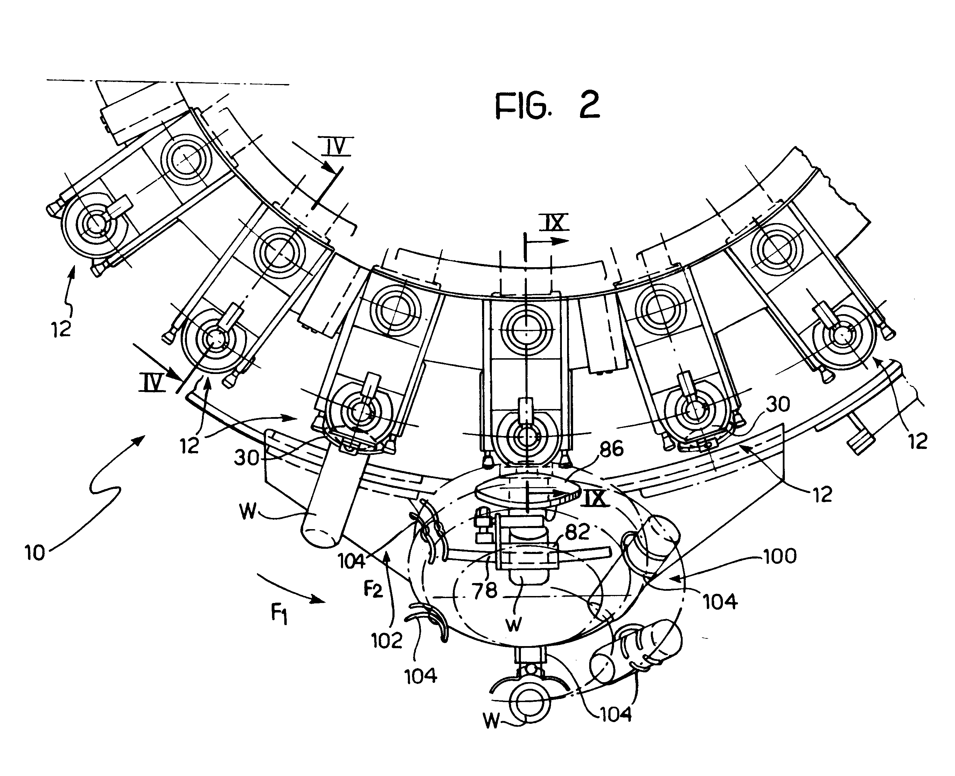

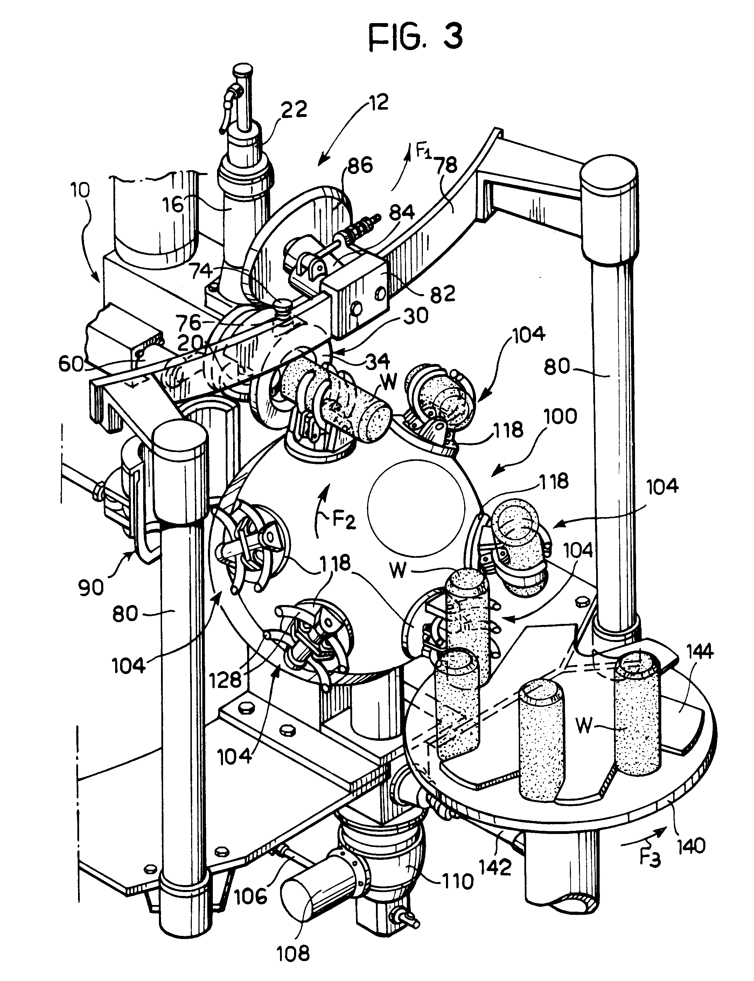

With reference to Figures 1 to 3, a machine for manufacturing blown glass articles includes a carousel 10 which can rotate in known manner about a central vertical axis Z. The sense of rotation of the carousel is indicated by the arrows $F_1$ in Figures 2 and 3.

The carousel 10 includes a plurality of blowing units or devices, each of which is generally indicated 12.

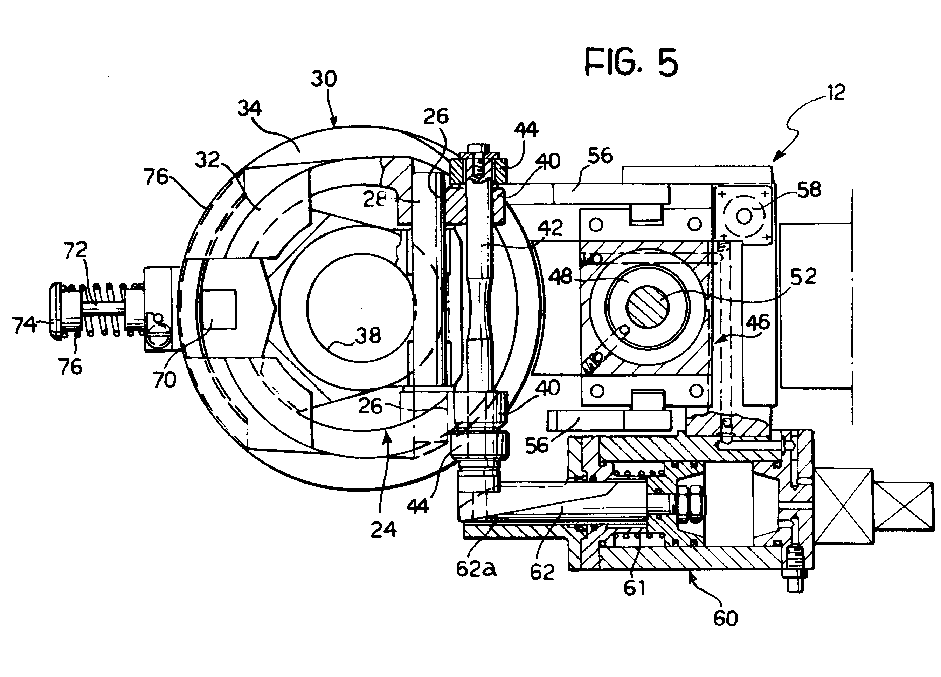

With reference to Figures 1 to 10, each of the units 12 includes a hollow shaft 14 having a vertical axis and driven by an electric motor 16. A second hollow shaft 18 is slidable vertically in the hollow shaft 14 and is keyed for rotation therewith. The lower end of the shaft 18 carries a blowing head 20 of known type. The upward and downward movements of the shaft 18 and the head 20 are driven by a pneumatic actuator 22.

A support 24 is keyed to the lower end of the shaft 14 and has a pair of bush parts with horizontally aligned articulation holes 26. A horizontal pin 28 is inserted in the holes 26.

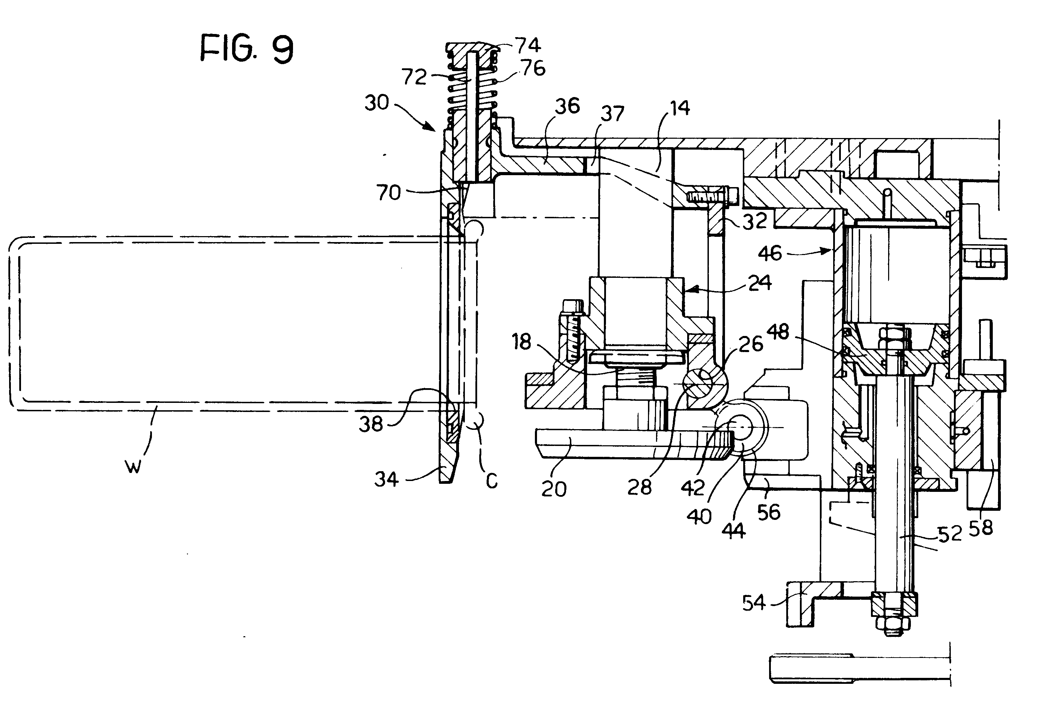

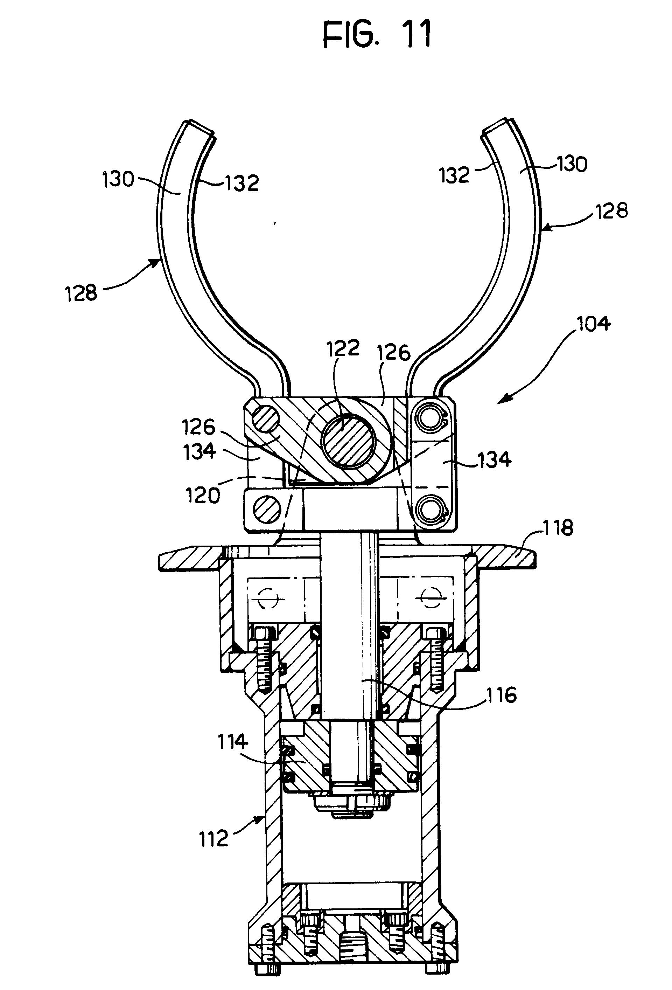

A tilting element, generally indicated 30, is associated with the support 24. Seen from the side, the element 30 has a generally C-shaped profile with a horseshoe-shaped head part 32 and an annular foot part 34 interconnected by a lateral cheek 36. The cheek 36 has a U-shaped aperture 37 which extends into the head part 32 to prevent the tilting element 30 from interfering with the shaft 14 when the element 30 is tilted as in Figures 9 and 10.

The head part 30 is articulated about the pin 28 and surrounds the support 24.

The foot part 34 constitutes the working table of the unit and has a central mouth 38 for receiving a gob of molten glass.

The head part 32 is provided with a pair of lugs 40 which are aligned horizontally on the opposite side of the axis of rotation of the head 20 from the cheek 36. The lugs 40 house a pin 42. The horizontal axis of the pin 28 is situated between the vertical axis of rotation of the head 20 and the horizontal axis of the pin 42. Respective wheels or rollers 44 are mounted for rotation on the pin 42, outwardly of the lugs 40. The wheels 44 may be constituted by rolling bearings.

Radially inwardly of the carousel, each unit includes a pneumatic linear actuator 46 with a vertical axis. The actuator 46 is of the double-acting type and includes a piston 48 and a rod 52. The rod 52 projects sealingly at the lower end and carries a U-shaped yoke 54. Respective C-shaped forks 56 which are open towards the head part 32 of the tilting element 30 are fixed to the sides of the yoke 54.

A linear shock-absorber 58, whose function will be explained below, is associated with the yoke 54.

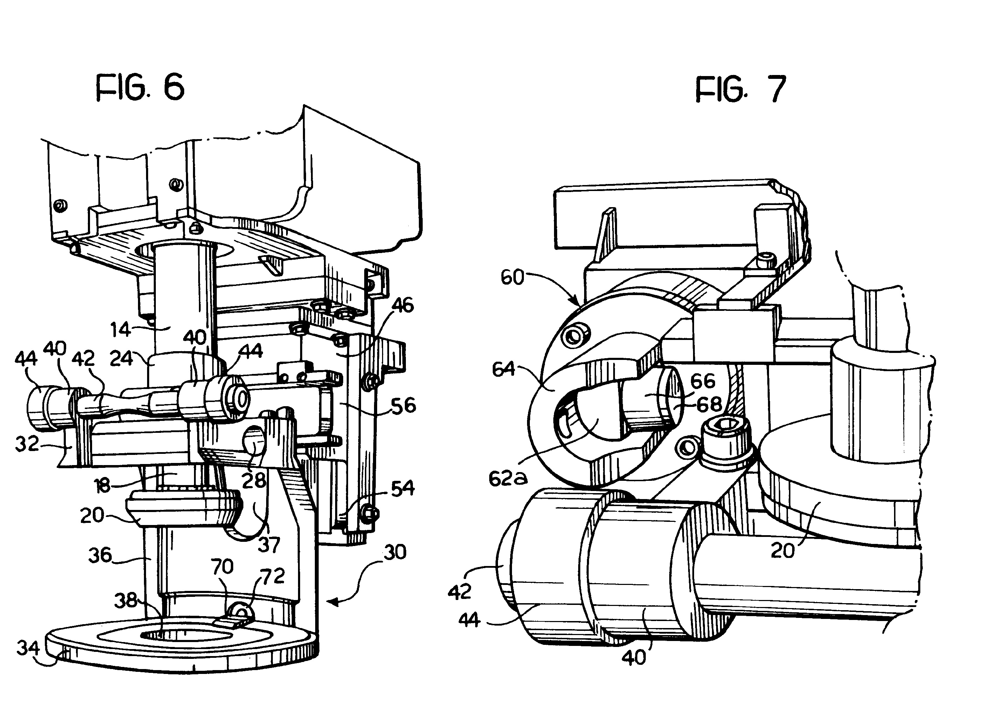

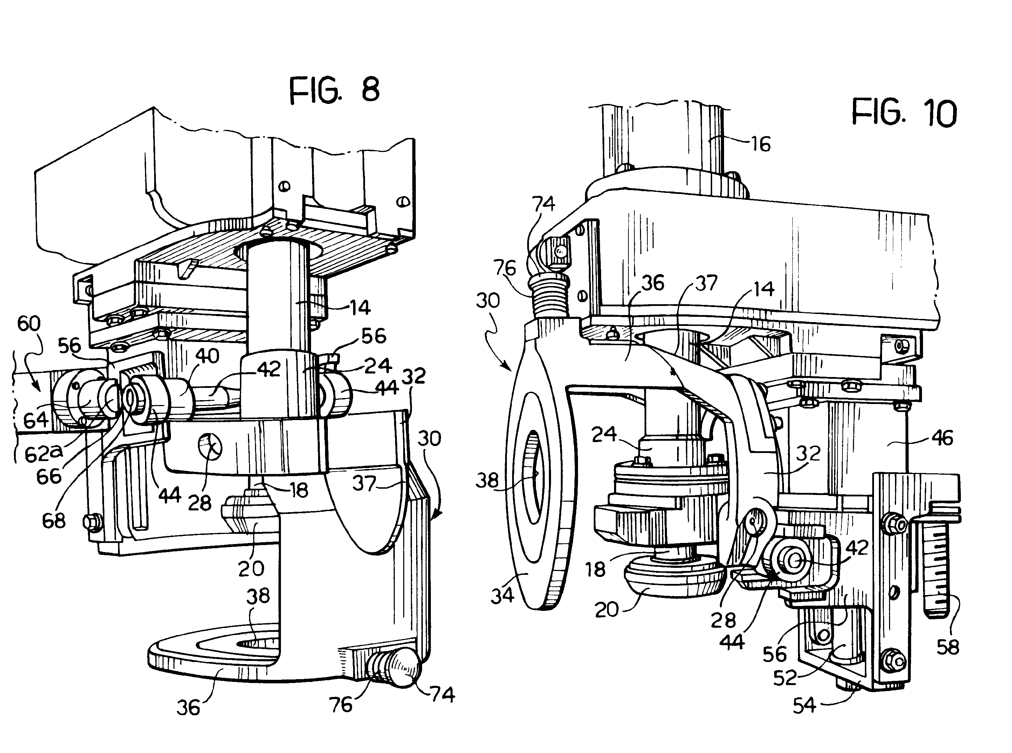

A second single-acting pneumatic actuator 60 with a horizontal axis is fixed to one side of the actuator 46 and has a spring 61 for biassing it into its contracted condition. The rod 62 of the actuator 60 has a projecting end, indicated 62a in Figures 7 and 8, which is directed radially outwardly of the carousel. The projecting end 62a is housed in a fixed housing 64 which has a C-shaped section and opens towards the inside of the unit. The end 62a of the rod 62 carries a lateral appendage 66 which in turn carries a soft buffer 68. The function of the actuator 60 and its buffer 68 will be described below.

Returning to the tilting element 30, a cutting member is associated with the working table 38 and is constituted by a blade 70 which can slide radially of the mouth 38 at the level of the table 34. The blade 70 is provided with a tang 72 which can slide in the cheek 36 and terminates in a tappet 74. A helical spring 76 is interposed between the tappet 74 and the cheek 36 for biassing the blade 70 into a position in which its cutting edge is retracted from the edge of the mouth 38.

Figures 1, 2 and 3 show, amongst other things, a station for the discharge of the blown glass articles from the units 12 of the carousel 10. In this station there is a cross member 78 supported by two columns 80. A bracket 82 is mounted on the cross member 78 and carries an idle wheel 86 by means of a connecting rod 84. As can be seen, the wheel 86 constitutes a stationary cam member with which the tappet 74 of each unit is intended to cooperate.

A pneumatic actuator 88 is coupled to the connecting rod 84 and serves to impart a small downward travel to the wheel 86 in the presence of each tappet 74 to ensure its operation.

A known type of die 90 which can be opened like a book, visible in Figures 1 and 3, is associated with each unit 12. The die 90 is situated beneath the tilting element 30.

The operation of the machine will now be described.

In Figure 2, the sense of rotation of the carousel 10 is indicated by the arrow $F_1$. The carousel 10 rotates at a constant speed.

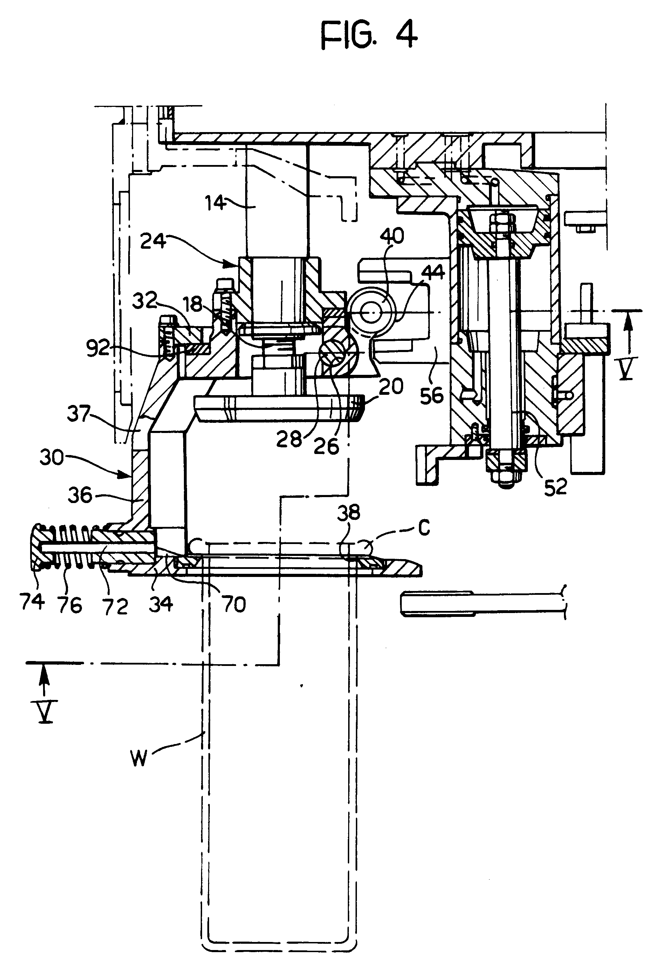

In order to blow an article, the tilting apparatus 30 is situated in the position of Figures 4, 5, 6 and 8, with the working table 34 interposed between the head 20 and the die 90. In this position, the head part 32 of the tilting element 30 bears on the support 24 with the interposition of a pair of metal stops 92 (Figure 4).

At a point in the travel of a unit 12 which is off the sheet of Figure 2, and whilst the head 20 is raised, a gob of molten glass is placed on the table 34 in known manner and rests on the edge of the mouth 38. The head 20 then descends onto the gob of glass in known manner, the die 90 is closed under the mouth 38, the head 20 and the tiltable element 30 are rotated, and the blowing of the article is effected, in known manner, through the tubular shaft 18.

Upon completion of the blowing, the head 20 is raised, the die 90 is opened, and the blown article is situated as in Figure 4, where it is indicated W. The product W remains suspended from the edge of the mouth 38 by means of a collar C.

When the unit 12 reaches a point which precedes the discharge station (on the left in Figure 2), the rotation of the head 20 of the tilting element 30 is stopped by the cutting-off of the supply to the electric motor 16 and the simultaneous operation of a brake associated with the shaft 14, all in known manner.

During the stoppage of the rotation, the actuator 60 is supplied so that its rod 62 extends against the force of the spring 61. This brings the buffer 68 into the path of a corresponding end of the pin 42. The rotation of the tilting element 30 about the vertical axis thus stops in a condition in which the cheek 36 faces radially outwardly of the carousel, as illustrated in Figure 8.

In this condition, the two wheels 44 are within the forks 56, as shown in Figures 4 and 8.

When the unit 12 in question reaches the vicinity of the discharge station (on the left in Figure 2), the actuator 46 is supplied and the forks 56 are lowered, pulling the wheels 44 downwards. The element 30 is thus tilted to the position illustrated in Figures 9 and 10, in which the table 34 is arranged at 90° to its working position and the product W (Figure 9) is oriented horizontally and directed radially outwardly. This condition is also illustrated in Figures 2 and 3. The tilting of the element 30 is damped by the shock-absorber 58 so that there is no impact at the end of its travel.

When the unit 12 in question arrives at the discharge station, the tappet 74 engages the cam or idle wheel 86 and the blade 70 is rapidly lowered to a position in which its cutting edge is advanced across the edge of the mouth 38. This movement of the blade 70 cuts off the collar C which falls into an underlying receptacle (not shown). When the collar is being cut, however, the article W is already retained by a transfer device which will now be described.

The transfer device is illustrated in Figures 1 and 3, where it is generally indicated 100.

The transfer device 100 comprises a drum 102 whose axis of rotation Y is inclined downwardly at 45° towards the axis Z of the carousel and lies in a radial plane relative to that axis.

The drum 102 carries a plurality of grippers 104 on its periphery, details of which will be described below.

The drum 102 is rotated continously and in synchronism with the carousel 10 by means of a mechanical transmission 106. This transmission comprises a differential 108 provided with a geared motor 110 which serves to regulate the synchronism so that in the upper part of their travel the grippers 104 precisely follow the movement of the articles W when they are oriented horizontally. The sense of rotation of the drum is indicated by the arrows $F_2$ in Figures 2 and 3.

With particular reference to Figure 11, each gripper 104 includes a double-acting pneumatic actuator 112 housed in the drum 102. The piston of the actuator 112 is indicated 114 and its piston rod is indicated 116. The arrangement is such that the axis of the rod 116 is vertical when the device 104 is at the highest point of its travel and, when it is at the lowest point, the axis of the rod 116 is horizontal.

The cylinder of the actuator 112 is fixed to the periphery of the drum 102 by means of a flange 118.

The flange 118 carries a pair of articulation lugs 120 between which a pin 122 extends.

The end of the rod 116 which is outside the drum 102 carries a yoke 124. Four rocker arms 126 are pivoted centrally on the pin 122. A respective jaw 128 of the gripper is firmly fixed to each rocker arm 126. Each jaw 128 is constituted by a shaped piece of metal rod 130 and a soft covering 132. The shaping of the jaws 128 depends on the shape of the products to be transferred.

Each rocker arm is connected to the yoke 124 by means of a respective connecting rod 134. With reference to Figure 11, each right-hand connecting rod 134 is articulated to a rocker arm 26 which carries a left-hand jaw 128 and vice versa. With this arrangement, the extension of the actuator 112 causes the two pairs of jaws 128 to move apart, that is, the opening of the gripper, and its contraction causes the closure of the gripper.

The grippers 104 are operated pneumatically so that each of them arrives in the open condition beneath an article W which is in the discharge station and the gripper then closes around the product just before the blade 70 cuts off the collar C.

The grippers 104 then remain closed until they reach the lowest point of their travel.

With reference again to Figures 1 and 3, a horizontal table 140 is associated with the transfer device 100 and is rotated in the sense of the arrow $F_3$ by a shaft 142 which takes its drive from the transmission 106, downstream of the differential 108. The table 140 carries a star-shaped plate 142 with recesses 144 in which the articles are deposited as a result of the opening of the grippers at the lowest point of their travel, as illustrated in Figure 3.

The articles are then removed from the table 140 one by one in a manner not illustrated.

## Claims

1. A device for the manufacture of blown glass articles (W), of the type comprising a blowing head (20) with a vertical axis, an openable die (90) situated beneath the head, and a working table (34) with a mouth (38) for receiving a gob of molten glass, and in which the table (34) can be tilted between a working position in which it is interposed between the head (20) and the die (90) and a position for the discharge of the article (W), the head (20) being adapted to act on the gob to blow it into the die (90) through the mouth (38), and a cutting member (70) being provided for cutting the collar (C) of solidified glass around the edge of the mouth (38), at the level of the table (34), when the table (34) is in the discharge position, characterised in that the working table (34) is tilted through 90° between the working position and the discharge position.

2. A machine for the manufacture of blown glass articles (W), of the type comprising a carousel (10) having a vertical axis and carrying a plurality of units (12), each of which includes a blowing head (20) with a vertical axis, an openable die (90) situated beneath the head (20), and a working table (34) with a mouth (38) for receiving a gob of molten glass, and in which the table (34) of each unit (12) can be tilted, at a discharge station, between the head (20) and the die (90) and a position for the discharge of the article (W), the head (20) being adapted to act on the gob to blow it into the die (90) through the mouth (38), and a cutting member (70) being provided for cutting the collar (C) of solidified glass around the edge of the mouth (38) at the level of the table (34), when the table (34) is in the discharge station, characterised in that the working table (34) of each unit (12) is tilted through 90° between the working position and the discharge position so that, when the table (34) is in the discharge position, the article (W) is directed radially and horizontally outwardly of the carousel (10).

3. A device or a machine according to claim 1 or claim 2, characterised in that the or each structure cutting member is a blade (70) which can slide at the level of the table (34) between a rest position in which its cutting edge is retracted from the edge of the mouth (38) and a cutting position in which the cutting edge is advanced across the edge of the mouth (38).

4. A device or a machine according to any of claims 1 to 3, characterised in that the or each device is of the type having a rotary blowing head carried by a hollow shaft, and the working table (34) forms part of a tilting element (30) which is supported for rotation coaxially with the head (20).

5. A device or a machine according to claim 4, characterised in that the tilting element (30) has a substantially C-shaped lateral profile with a head part (32) which surrounds the hollow shaft (18) of the blowing head (20), an annular foot part (34) which constitutes the working table, and a side cheek (36) which interconnects the head part (32) and the foot part (34), and in that it includes a second hollow shaft (14) which surrounds the shaft (18) of the head (20) coaxially and is rotatable therewith, and the second hollow shaft (14) carries, above the head (20), a support (24) to which the head part (32) of the tilting element (30) is articulated about a horizontal axis.

6. A device or a machine according to claim 5, characterised in that the head part (32) of the tilting element (30) carries a pair of wheels or rollers (44) which are aligned on a horizontal axis situated on the opposite side of the axis of rotation of the head (20) from the cheek (36) and the axis of articulation of the head part (32) is situated between the axis of rotation of the head (20) and the axis of the wheels (44), and in that it includes a pair of forks (56) which are open towards the head part (32) and can be driven up and down in unison so as to occupy a raised position in which, when the tilting element (30) is in the position corresponding to the working position of the table (34), the wheels (44) pass into the forks (56) during the rotation of the tilting element (30) and, when the element (30) has stopped rotating with the wheels (44) in the forks (56), the latter are adapted to reach a lowered position, pulling the wheels (44) to that position and consequently tilting the element (30) 90° to the position which corresponds to the discharge position of the table (34).

7. A machine according to claim 2, characterised in that the blade (70) is biassed into its rest position by resilient means (76) and is provided with a tappet (74) at its end opposite the cutting edge, and in that a stationary cam member (86) is provided in the discharge station and can be engaged by the tappet (74) as a result of the movement of the carousel (10) to thrust the blade (70) into the cutting position against the force of the resilient means (76).

8. A machine according to claim 7, characterised in that the cam member is an idle wheel (86).

9. A machine according to any one of claims 2 and 6 to 8, characterised in that, in the discharge station, it also includes a transfer device (100) having at least one gripper (104) which can be opened and closed around the article (W) and is movable between a position in which it retains the piece during the cutting of the collar (C) and takes hold of the article itself, and a position in which it deposits the article (W) on a horizontal discharge conveyor (140).

10. A machine according to claim 9, characterised in that the transfer device includes a gripper-carrying drum (102) with an axis (Y) which is inclined downwardly at 45° towards the axis (Z) of the carousel (10) and lies in a radial plane relative to the axis (Z), the drum (102) carrying a plurality of equiangularly-spaced grippers (104) on its periphery, the grippers (104) being arranged to grip each article (W) when the article (W) is detached from the table (34) and to transfer it so as to deposit it on the conveyor (140), and in that the carousel (10) and the drum (102) are interconnected so as to rotate in synchronism.

11. A machine according to claim 9, characterised in that the carousel (10) and the gripper-carrying drum (102) are mechanically interconnected by means of an adjustable differential (108).

**Patentansprüche**

1. Vorrichtung zur Herstellung von geblasenen Glasartikeln (W) mit einem Blaskopf (20) mit einer vertikalen Achse, einem öffenbaren Halteelement (90), das unter dem Kopf angeordnet ist, einem Bearbeitungstisch (34) mit einem Mund (38) zur Aufnahme eines Glaspostens, wobei der Tisch (34) zwischen einer Arbeitsstellung, in der er zwischen dem Kopf (20) und dem Halteelement (90) angeordnet ist, und einer Stellung zum Ausbringen des Artikels (W) verschwenkt werden kann und wobei der Kopf (20) dazu geeignet ist, den Glasposten durch den Mund (38) in das Halteelement (90) zu blasen, und einem Schneidelement (70), das zum Abschneiden des Rings (C) aus verfestigtem Glas an der Endkante des Mundes (38) in der Tischebene vorgesehen ist, wenn sich der Tisch (34) in der Ausgabestellung befindet, dadurch gekennzeichnet, daß der Bearbeitungstisch (34) um 90° zwischen der Arbeitsstellung und der Ausgabestellung geschwenkt wird.

2. Maschine zum Herstellen von geblasenen Glasartikeln (W) mit einem Karussell (10) mit einer vertikalen Achse, das mehrere Einheiten (12) trägt, die jede einen Blaskopf (20) mit einer vertikalen Achse, ein öffenbares Halteelement (90), das unterhalb des Kopfes (20) angeordnet ist, einen Bearbeitungstisch (34) mit einem Mund (38) zur Aufnahme eines Glaspostens aufweisen, wobei der Tisch (34) jeder Einheit (12) an einer Ausgabestation zwischen einer Arbeitsstellung, in der er zwischen dem Kopf (20) und dem Halteelement (90) angeordnet ist, und einer Stellung zur Ausgabe des Artikels (W) verschwenkt werden kann und wobei der Kopf (20) dazu geeignet ist, den Glasposten durch den Mund (38) in das Halteelement (90) zu blasen, und ein Schneidelement (70) zum Abschneiden des Rings (C) aus verfestigtem Glas an der Endkante des Mundes (38) in der Tischebene, wenn sich der Tisch (34) in der Ausgabestellung befindet, enthalten, dadurch gekennzeichnet, daß der Bearbeitungstisch (34) jeder Einheit (12) um 90° zwischen der Arbeitsstellung und der Ausgabestellung verschwenkt wird, wobei der Artikel (W) radial und horizontal nach außen aus dem Karussell (10) gerichtet ist, wenn sich der Tisch (34) in der Ausgabestellung befindet.

3. Vorrichtung oder Maschine nach Anspruch 1 oder Anspruch 2, dadurch gekennzeichnet, daß das oder jedes Strukturschneidelement eine Klinge (70) ist, die in der Tischebene zwischen einer Ruhestellung, in der die Schneidkante von der Endkante des Mundes (38) zurückgezogen ist, und einer Schneidstellung, in der die Schneidkante über die Endkante des Mundes (38) vorgeschoben ist, gleiten kann.

4. Vorrichtung oder Maschine nach einem der Ansprüche 1 bis 3, dadurch gekennzeichnet, daß die oder jede Vorrichtung einen von einem hohlen Schaft getragenen drehbaren Blaskopf aufweist und der Bearbeitungstisch (34) einen Teil eines Verschwenkelements (30) bildet, das zur koaxialen Drehung mit dem Kopf (20) gelagert ist.

5. Vorrichtung oder Maschine nach Anspruch 4, dadurch gekennzeichnet, daß das Verschwenkelement (30) ein im wesentlichen C-förmiges Lateralprofil aufweist und ein den hohlen Schaft (18) des Blaskopfs (20) umgebendes Kopfteil (32), ein ringförmiges Fußteil (34), das den Bearbeitungstisch bildet, ein Seitenteil (36), welches das Kopfteil (32) und das Fußteil (34) verbindet, und einen zweiten hohlen Schaft (14) enthält, der den Schaft (18) des Kopfs (20) koaxial umgibt und damit drehbar ist, wobei der zweite hohle Schaft (14) über dem Kopf (20) ein Stützteil (24) trägt, an welches das Kopfteil (32) des Verschwenkelements (30) über eine horizontale Achse angelenkt ist.

6. Vorrichtung oder Maschine nach Anspruch 5, dadurch gekennzeichnet, daß das Kopfteil (32) des Verschwenkelements (30) ein Paar Räder oder Rollen (44) trägt, die auf einer horizontalen Achse zu dem Teil (36) gegenüberliegend bezüglich der Drehachse des Kopfs (20) angeordnet sind und wobei die Verschwenkachse des Kopfteils (32) zwischen der Drehachse des Kopfs (20) und der Achse der Räder (44) angeordnet ist, und daß das Verschwenkelement (30) ein Paar Gabeln (56) enthält, die in Richtung des Kopfteils (32) offen sind und zusammen nach oben und unten in eine angehobene Stellung angetrieben werden können, in der, wenn sich das Verschwenkelement (30) in der der Arbeitsstellung des Tisches (34) entsprechenden Position befindet, die Räder (44) in den Gabeln (56) während der Drehung des Verschwenkelements (30) eingepasst sind, und wenn das Element (30) die Drehbewegung mit den Rädern (44) in den Gabeln (56) gestoppt hat, sind die letzteren dazu geeignet, in eine abgesenkte Stellung angetrieben zu werden, wobei sie die Räder (44) in diese Stellung ziehen und als Folge das Element (30) um 90° zu der Stellung verschwenken, die der Ausgabestellung des Tisches (34) entspricht.

7. Maschine nach Anspruch 2, dadurch gekennzeichnet, daß die Klinge (70) in ihre Ruhestellung durch elastische Mittel (76) vorgespannt ist und mit einem Anschlag (74) an dem der Schneidkante gegenüberliegenden Ende versehen ist, und ein feststehendes Nockenteil (86) in der Ausgabestation vorgesehen ist, das mit dem Anschlag (74) durch die Bewegung des Karussells (10) in Eingriff gebracht werden kann, so daß die Klinge (70) in die Schneidstellung gegen die Kraft der elastischen Mittel (76) geschoben wird.

8. Maschine nach Anspruch 7, dadurch gekennzeichnet, daß das Nockenteil ein Leerrad (86) ist.

9. Maschine nach einem der Ansprüche 2 und 6 bis 8, dadurch gekennzeichnet, daß die Ausgabestation eine Übertragungsvorrichtung (100) mit mindestens einem Greifer (104) enthält, der geöffnet und um den Artikel (W) geschlossen werden und zwischen einer Position bewegt werden kann, in der er das Stück während dem Schneiden des Rings (C) hält und den Artikel übernimmt und einer Position, in der er den Artikel (W) auf einem horizontalen Ausgabeförderer (140) positioniert.

10. Maschine nach Anspruch 9, dadurch gekennzeichnet, daß das Übertragungsgerät eine greifertragende Trommel (102) mit einer Achse (Y) enthält, die gegenüber der Achse (Z) des Karussells (10) nach unten um 45° geneigt ist und in einer radialen Ebene relativ zu der Achse (Z) angeordnet ist, die Trommel (102) mehrere gleichwinklig beabstandete Greifer (104) an deren Umfang trägt, wobei die Greifer (104) zum Greifen eines jeden Artikels (W) angeordnet sind, wenn der Artikel (W) von dem Tisch (34) gelöst ist und ihn so befördern, daß er auf dem Förderer (140) angeordnet wird, und das Karussell (10) und die Trommel (102) so miteinander verbunden sind, daß sie sich synchron drehen.

11. Maschine nach Anspruch 9, dadurch gekennzeichnet, daß das Karussell (10) und die greifertragende Trommel (102) mechanisch miteinander durch ein einstellbares Differential (108) verbunden sind.

## Revendications

1. Dispositif pour la fabrication d'articles en verre soufflé (W), du type comprenant une tête de soufflage (20) avec un axe vertical, une matrice qui s'ouvre (90) située sous la tête, et une table de travail (34) avec une ouverture (38) pour recevoir une paraison de verre fondu, et dans lequel la table (34) peut être inclinée entre une position de travail dans laquelle elle est située entre la tête (20) et la matrice (90) et une position pour la décharge de l'article (W), la tête (20) étant adaptée à agir sur la paraison pour la faire passer dans la matrice (90) via l'ouverture (38), et un organe de coupe (70) étant prévu pour couper le collier (C) de verre solidifié autour du bord de l'ouverture (38), au niveau de la table (34), lorsque la table (34) se trouve dans la position de décharge, caractérisé en ce que la table de travail (34) est inclinée à 90° entre la position de travail et la position de décharge.

2. Machine pour la fabrication d'articles en verre soufflé (W), du type comprenant un chariot à plateau tournant (10) avec un axe vertical et supportant une pluralité d'unités (12), chacune d'elles comprenant une tête de soufflage (20) avec un axe vertical, une matrice qui s'ouvre (90) située sous la tête (20), et une table de travail (34) avec une ouverture (38) pour recevoir une paraison de verre fondu, et dans lequel la table (34) de chaque unité (12) peut être inclinée, à un poste de décharge, entre une position de travail dans laquelle elle est située entre la tête (20) et la matrice (90) et une position pour la décharge de l'article (W), la tête (20) étant adaptée à agir sur la paraison pour la faire passer dans la matrice (90) via l'ouverture (38), et un organe de coupe (70) étant prévu pour couper le collier (C) de verre solidifié autour du bord de l'ouverture (38), au niveau de la table (34), lorsque la table (34) se trouve dans la position de décharge, caractérisée en ce que la table de travail (34) de chaque unité (12) est inclinée à 90° entre la position de travail et la position de décharge de manière que lorsque la table (34) se trouve dans la position de décharge, l'article (W) soit dirigé radialement et horizontalement vers l'extérieur du chariot à plateau tournant (10).

3. Dispositif ou machine selon la revendication 1 ou 2, caractérisé en ce que l'organe de coupe de structure ou chaque organe de coupe de structure consiste en une lame (70) qui peut coulisser au niveau de la table (34) entre une position de repos dans laquelle son bord de coupe est rétracté du bord de l'ouverture (38) et une position de coupe dans laquelle le bord de coupe est avancé en travers du bord de l'ouverture (38).

4. Dispositif ou machine selon l'une quelconque des revendications 1 à 3, caractérisé en ce que le dispositif ou chaque dispositif est du type comportant une tête de soufflage rotative supportée par un arbre creux, et la table de travail (34) fait partie d'un élément inclinable (30) qui est supporté pour rotation co-axialement avec la tête (20).

5. Dispositif ou machine selon la revendication 4, caractérisé en ce que l'élément inclinable (30) a un profil latéral sensiblement en forme de C avec une tête (32) qui entoure l'arbre creux (18) de la tête de soufflage (20), un pied annulaire (34) qui constitue la table de travail, et une joue latérale (36) qui relie mutuellement la tête (32) et le pied (34), et en ce qu'il comprend un second arbre creux (14) qui entoure l'arbre (18) de la tête (20) co-axialement et peut tourner avec lui, et le second arbre creux (14) porte, au-dessus de la tête (20), un support (24) sur lequel la tête (32) de l'élément inclinable (30) est articulée selon un axe horizontal.

6. Dispositif ou machine selon la revendication 5, caractérisé en ce que la tête (32) de l'élément inclinable (30) supporte une paire de roues ou rouleaux (44) qui sont alignés sur un axe horizontal situé sur le côté opposé de l'axe de rotation de la tête (20) depuis la joue (36) et l'axe d'articulation de la tête (32) est situé entre l'axe de rotation de la tête (20) et l'axe des roues (44), et en ce qu'il comprend une paire de fourches (56) qui sont ouvertes vers la tête (32) et peuvent être entraînées verticalement à l'unisson de manière à occuper une position levée dans laquelle, lorsque l'élément inclinable (30) se trouve dans la position correspondant à la position de travail de la table (34), les roues (44) passent dans les fourches (56) durant la rotation de l'élément inclinable (30) et, lorsque l'élément (30) s'est arrêté de tourner avec les roues (44) dans les fourches (56), ces dernières sont adaptées à atteindre une position baissée, tirant les roues (44) jusqu'à cette position et inclinant par conséquent l'élément (30) à 90° jusqu'à la position qui correspond à la position de décharge de la table (34).

7. Machine selon la revendication 2, caractérisée en ce que la lame (70) est sollicitée dans sa position de repos par un moyen élastique (76) et est dotée d'un mentonnet (74) à son extrémité opposée au bord de coupe, et en ce qu'une came fixe (86) est disposée dans le poste de décharge et peut être engagée par le mentonnet (74) en conséquence du mouvement du chariot à plateau tournant (10) pour pousser la lame dans la position de coupe à l'encontre de la force du moyen élastique (76).

8. Machine selon la revendication 7, caractérisée en ce que la came est une roue folle (86).

9. Machine selon l'une quelconque des revendications 2 et 6 à 8, caractérisée en ce que, dans le poste de décharge, elle comprend également un dispositif de transfert (100) comportant au moins une pince (104) qui peut être ouverte et fermée autour de l'article (W) et est mobile entre une position dans laquelle elle retient la pièce durant la coupe du collier (C) et tient l'article même, et une position dans laquelle elle dépose l'article (W) sur une bande transporteuse de décharge horizontale (140).

10. Machine selon la revendication 9, caractérisée en ce que le dispositif de transfert comprend un tambour de support de pinces (102) avec un axe (Y) qui est incliné vers le bas à 45° vers l'axe (Z) du chariot à plateau tournant (10) et se situe dans un plan radial relativement à l'axe (Z), le tambour (102) supportant une pluralité de pinces (104) espacées de manière équiangulaire sur sa périphérie, les pinces (104) étant disposées de manière à saisir chaque article (W) lorsque l'article (W) est détaché de la table (34) et le transférer pour le déposer sur la bande transporteuse (140), et en ce que le chariot à plateau tournant (10) et le tambour (102) sont mutuellement reliés pour tourner de manière synchronisée.

11. Machine selon la revendication 9, caractérisée en ce que le chariot à plateau tournant (10) et le tambour de support de pinces (102) sont mutuellement reliés mécaniquement au moyen d'un différentiel réglable (108).

FIG. 1

EP 0 323 415 B1

FIG. 2

10

# FIG. 3

EP 0 323 415 B1

# FIG. 4

# FIG. 5

EP 0 323 415 B1

FIG. 7

FIG. 6

FIG. 10

FIG. 8

FIG. 9

# FIG. 11